# EUROPÄISCHE PATENTANMELDUNG

(11) **EP 3 970 574 A1**
(43) Veröffentlichungstag der Anmeldung: **23.03.2022**
(21) Anmeldenummer: 19929254.1
(22) Anmeldetag: 17.09.2019
(51) Int. Cl.: A47J 31/00

(54) **VORRICHTUNG UND VERFAHREN ZUR EXTRAKTION VON KOMPONENTEN IN FESTSTOFFEN MITTELS NANOBLASEN**

(30) Priorität: 17.05.2019 CN 201910415212
(71) Anmelder: Severin Asia Limited, Hongkong SVR (China) 999077 (CN)
(72) Erfinder: LOUIE, Wai Hang, Shenzhen, Guangdong 518000 (CN); MARKO, Walter Unger, Shenzhen, Guangdong 518000 (CN); WONG, Kowk Wai, Shenzhen, Guangdong 518000 (CN); HO, Ka Yee, Shenzhen, Guangdong 518000 (CN); POON, Sum Hang Grace, Shenzhen, Guangdong 518000 (CN)
(74) Vertreter: Köchling, Conrad-Joachim
(86) Internationale Anmeldenummer: PCT/CN2019/106114
(87) Internationale Veröffentlichungsnummer: WO 2020/232923

(57) **Zusammenfassung**

Eine Vorrichtung und ein Verfahren zum Extrahieren der Inhaltsstoffe aus Festsubstanzen durch Nanobläschen. Die Vorrichtung besteht aus einem Reaktionsbehälter (2) für die zu extrahierenden Festsubstanzen, einem Nanobläschengenerator (3) zur Erzeugung einer nanobläschenhaltigen Flüssigkeit und einem Energiegenerator. Die nanobläschenhaltige Flüssigkeit wird mit der zu extrahierenden Festsubstanz vermischt, und der Energiegenerator gibt Energie in den Reaktionsbehälter (2) ab, um die Nanobläschen zu zerbrechen, damit der Extraktionseffekt der Festsubstanz in der Flüssigkeit verstärkt wird.

## Beschreibung

### Technisches Gebiet

Die Erfindung betrifft das Gebiet der Extraktion der Inhaltsstoffe aus Festsubstanzen, beziehungsweise eine Vorrichtung und ein Verfahren zum Extrahieren der Inhaltsstoffe aus Festsubstanzen durch Nanobläschen.

### Hintergrundtechnologie

Zum Extrahieren der Inhaltstoffe aus Festsubstanzen, wie z.B. aus dem Kaffeepulver, chinesischem, westlichem und japanischem Teepulver, Kräuterteepulver usw., um Getränken zuzubereiten, besteht das übliche Verfahren auf dem Markt darin, ein festes Pulver in einen Behälter einzufüllen, eine bestimmte Menge Wasser einzugießen, die Mischung manuell oder mit einem Gerät umzurühren und über einen Zeitraum (normalerweise 12-24 Stunden) einzuweichen, damit Vitamin C, Polyphenol-Antioxidantien, Koffein und andere Inhaltsstoffe der Festsubstanz ins Wasser gelangen. Anschließend wird der Extraktionsprozess beendet und ein Getränk mit den oben genannten Zutaten ist entstanden. Doch dieses Verfahren extrahiert gewöhnlich unzureichende Inhaltstoffe, was zu einem nicht optimalen Geschmack des Getränks führt.

Daher muss die vorhandene Technologie weiterentwickelt und verbessert werden.

### Gegenstand der Erfindung

Hinsichtlich der obigen technischen Probleme stellen das Ausführungsbeispiel dieser Erfindung eine Vorrichtung und ein Verfahren zum Extrahieren der Inhaltsstoffe aus Festsubstanzen durch Nanobläschen bereit, das Problem der unzureichenden Extraktion in bestehenden Verfahren zu lösen.

Die technische Konzeption der Erfindung:
Eine Vorrichtung zum Extrahieren der Inhaltsstoffe aus Festsubtanzen durch Nanobläschen besteht aus einem Reaktionsbehälter für die zu extrahierende Festsubstanz, einem Nanobläschengenerator zur Erzeugung einer nanobläschenhaltigen Flüssigkeit, und einem Energiegenerator. Die nanobläschenhaltige Flüssigkeit wird mit der zu extrahierenden Festsubstanz vermischt, und der Energiegenerator gibt Energie in den Reaktionsbehälter ab, um die Nanobläschen zu zerbrechen.

Ferner hat die o.g. Vorrichtung ein Fördergerät zur Förderung der nanobläschenhaltigen Flüssigkeit in den Reaktionsbehälter, um sie mit der zu extrahierenden Festsubstanz zu vermischen. Der Nanobläschengenerator umfasst ein Flüssigkeitseinlass- und Auslassrohr, wobei das Auslassrohr am Fördergerät angeschlossen ist.

Ferner hat die o.g. Vorrichtung einen Flüssigkeitsspeicher, der mit dem Flüssigkeitseinlassrohr verbunden ist.

Das Fördergerät der o.g. Vorrichtung hat eine Flüssigkeitspumpe und Leitungen, und die Pumpe ist über eine Leitung mit dem Reaktionsbehälter verbunden.

Die o.g. Vorrichtung enthält ferner eine Heizung, die an den Flüssigkeitsbehälter, zwischen der Flüssigkeitspumpe und dem Reaktionsbehälter oder an einer beliebigen Stelle unterhalb des Reaktionsbehälters angebracht werden kann.

Der Energiegenerator der o.g. Vorrichtung ist ein Schallwellengenerator oder ein Ultraschall-generator.

Der Energiegenerator hat einen Sendekopf, der über dem Reaktionsbehälter angeordnet ist, und am Reaktionsbehälter ist ein erstes Ventil zum Steuern des Ablasses der Lösung angeordnet.

Der Boden des Reaktionsbehälters ist mit einem ersten Messerkopf fürs Durchstechen bestückt, der mit dem ersten Ventil verknüpft ist.

Bei der o.g. Vorrichtung handelt es sich bei den Festsubstanzen um das Kaffeepulver und Gemüsepulver, und die Flüssigkeit ist das Wasser.

Das o.g. Verfahren zum Extrahieren der Inhaltsstoffe aus Festsubstanzen durch Nanobläschen enthält die folgenden Schritte:
Mit dem Nanobläschengenerator eine nanobläschenhaltige Flüssigkeit erzeugen;
Die nanobläschenhaltige Flüssigkeit in den Reaktionsbehälter fördern, sie mit der zu extrahierenden Festsubstanz vermischen und die Lösung zur Reaktion bringen;
Während der Reaktion Energie aus dem Energiegenerator in den Reaktionsbehälter abgeben, um die Nanobläschen zu zerbrechen.

Die technische Konzeption der vorliegenden Erfindung setzt einen Nanobläschengenerator zur Erhörung des Nanobläschengehalts in Flüssigkeiten ein. Die nanobläschenhaltige Flüssigkeit wird dann zum Reaktionsbehälter gefördert und mit einem festen Pulver vermischt. Gleichzeitig wird ein Energiegenerator aktiviert und gibt Energie in der Lösung ab, um die Nanobläschen zu zerbrechen, damit der Extraktionseffekt der Inhaltstoffe aus Festsubstanzen in Flüssigkeit verbessert wird.

### Beschreibung der Abbildungen

Abbildung 1: Eine Schnittansicht der Vorrichtung zum Extrahieren der Inhaltstoffe aus Festsubstanzen durch Nanobläschen in dem Ausführungsbeispiel der Erfindung.
Abbildung 2: Eine 3D-Ansicht der Vorrichtung zum Extrahieren der Inhaltstoffe aus Festsubstanzen durch Nanobläschen in dem Ausführungsbeispiel der Erfindung.
Abbildung 3: Eine Hauptansicht des Reaktionsbehälters in dem Ausführungsbeispiel der Erfindung.
Abbildung 4: Eine Schematische Darstellung des Nanobläschengenerator in dem Ausführungsbeispiel der Erfindung.
Abbildung 5: Eine Tabelle von den Nanobläschen, die bei unterschiedlichen Temperaturen erzeugt wurden, in dem Ausführungsbeispiel der Erfindung.
Abbildung 6: Vergleichskurven des Antioxidantiengehalts im Kaffee, der bei Raumtemperatur einmal durch das Kaltbrühverfahren und einmal durch das Verfahren mit der Vorrichtung der Erfindung extrahiert wurde.
Abbildung 7: Vergleichskurven des Antioxidantiengehalts im Kaffee, der bei tiefer als der Umgebungstemperatur einmal durch das Kaltbrühverfahren und einmal durch das Verfahren mit der Vorrichtung der Erfindung extrahiert wurde.
Abbildung 8: Vergleichskurven des Zuckergehalts im Kaffee, der bei Raumtemperatur einmal durch das Kaltbrühverfahren und einmal durch das Verfahren mit der Vorrichtung der Erfindung extrahiert wurde.
Abbildung 9: Vergleichskurven des Zuckergehalts im Kaffee, der bei tiefer als der Umgebungs-temperatur einmal durch das Kaltbrühverfahren und einmal durch das Verfahren mit der Vorrichtung der Erfindung extrahiert wurde.
Abbildung 10: Vergleichskurven des Polyphenolgehalts im Kaffee, der bei Raumtemperatur einmal durch das Kaltbrühverfahren und einmal durch das Verfahren mit der Vorrichtung der Erfindung extrahiert wurde.
Abbildung 11: Vergleichskurven des Polyphenolgehalts im Kaffee, der unter der Umgebungs-temperatur einmal durch das Kaltbrühverfahren und einmal durch das Verfahren mit der Vorrichtung der Erfindung extrahiert wurde.

### Das detaillierte Verfahren

Um den Zweck, die Konzeption und Vorteile der Erfindung besser zu verdeutlichen, nachstehend wird die Erfindung in Verbindung mit einem Ausführungsbeispiel eingehend beschrieben. Jedoch wird der beanspruchte Schutzumfang der Erfindung nicht auf das Ausführungsbeispiel beschränkt.

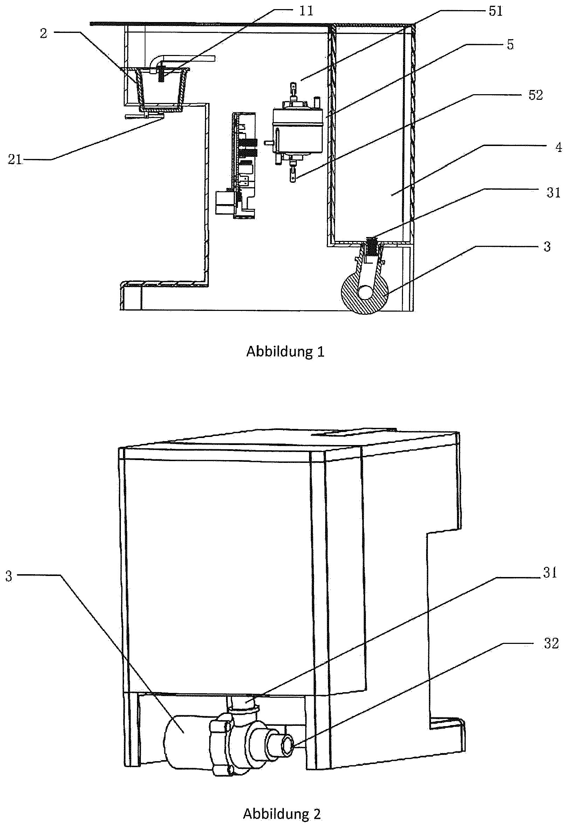

Wie die Abbildung 1 zeigt, besteht die Vorrichtung zum Extrahieren der Inhaltsstoffe aus Festsubstanzen durch Nanobläschen aus einem Nanobläschengenerator 3, einem Reaktionsbehälter 2, einem Energiegenerator (nicht im Bild). Dabei sind der Nanobläschengenerator 3 und der Reaktionsbehälter 2 an einem Gestell angebracht. Der Energiegenerator hat einen Sendekopf 11 über dem Reaktionsbehälter 2, um Energie in den Reaktionsbehälter 2 abzugeben und die Nanobläschen zu zerbrechen.

Bei den Festsubstanzen handelt es sich um Kaffeepulver, chinesisches, westliches und japanisches Teepulver und Kräuterteepulver. Der Energiegenerator kann ein Schallwellen-, Ultraschall- oder Lasergenerator sein.

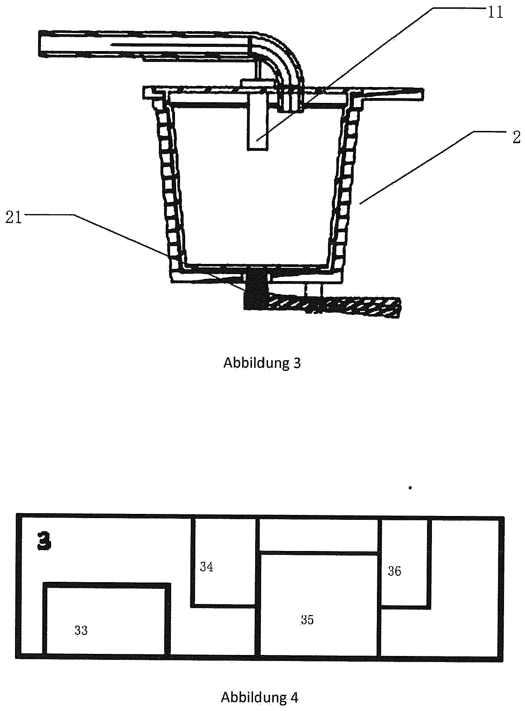

Der Nanobläschengenerator kann nach folgenden Struktur aufgebaut werden:
Wie die Abbildungen 1 und 4 zeigen, besteht der Nanobläschengenerator aus einer Luftpumpe 33, einer Flüssigkeitsumwälzpumpe 35, einer Luftzufuhrkomponente 34, einer rauen Komponente 36, einem Flüssigkeitseinlassrohr 31 und einem Flüssigkeitsauslassrohr 32. Die Luftzufuhrkomponente 34 und die raue Komponente 36 haben Mikroporen oder Mikroschlitze, um Bläschen in der Flüssigkeit zu dispergieren.

Wenn die Flüssigkeit die Luftzufuhrkomponente 34 passiert, erzeugt die Flüssigkeitsumwälzpumpe 35 einen Hochgeschwindigkeitsfluidstrom, und die Fließgeschwindigkeit der Flüssigkeit steigt plötzlich an, um den Druck in der Nähe der Mikroporen oder Mikroschlitze auf der Oberfläche der Luftzufuhrkomponente 34 zu verringern. Die Bläschen auf der Oberfläche der Mikroporen oder Mikroschlitze werden einer starken Trennkraft ausgesetzt, sodass Mikrobläschen und sogar Nanobläschen entstehen. Die entstandenen Mikrobläschen und Nanobläschen werden in die Flüssigkeitsumwälzpumpe 35 eingesaugt und auf der rauen Komponente 36 mit Druck zerstreut, um gleichmäßigere und stabilere Nanobläschen zu erzeugen. Durch Steuerung der Geschwindigkeit von Luft- und Fluidströmung und der Rauheit der rauen Komponente 36 können Nanobläschen mit verschiedenen Konzentrationen und Durchmessern erzeugt werden.

Das Luftzufuhrrohr der Luftpumpe 33 soll mit einem Vorfilter versehen werden, dessen Maschen einen Durchmesser von 0,4 µm haben. Die Strömungsgeschwindigkeit der Flüssigkeitsumwälzpumpe 35 beträgt mindestens 1800 l/h. Die Luftzufuhrkomponente 34 hat mindestens eine Mikropore, deren Durchmesser von 30 bis 40 µm liegt. Die raue Komponente 36 hat eine mittlere Oberflächenrauheit von 5 µm bis 50 µm.

Der Durchmesser der Nanobläschen, die der nach dieser Struktur aufgebaute Nanobläschen-generator erzeugt hat, beträgt mindestens unter 300 nm, gleichzeitig beträgt die Konzentration der Nanobläschen in der Flüssigkeit mindestens 1 × 10⁷ Einheit/l.

Anstelle vom Nanobläschengenerator 3 kann auch das System unter der Patentanmeldungsnummer 2017101567342 zur Erzeugung oxidierter Bläschen in Flüssigkeiten eingesetzt werden. Selbstverständlich kann man auch andere Systeme auf dem Markt verwenden, die Nanobläschen erzeugen können. Die Erfindung schließt ein solches nicht aus, sofern das System Nanobläschen in Flüssigkeiten (z. B. Wasser) erzeugen und die Flüssigkeit abfließen lassen kann.

Die Vorrichtung hat ferner über dem Nanobläschengenerator einen Flüssigkeitsspeicher 4, der an dem Flüssigkeitseinlassrohr 31 angeschlossen ist, um Flüssigkeit wie z.B. Wasser zu speichern.

Der Reaktionsbehälter 2 kann unterhalb des Flüssigkeitsauslassrohrs 32 angebracht werden, um die aus dem Auslassrohr abgeleitete Flüssigkeit aufzunehmen. Natürlich kann der Reaktionsbehälter 2 auch über dem Nanobläschengenerator 3 angebracht werden. Die Flüssigkeit wird durch eine Flüssigkeitspumpe in den Reaktionsbehälter geleitet, so dass der Benutzer die Lösung mit einem Behälter wie einer Tasse entnehmen kann, nachdem die Festsubstanz vollständig extrahiert ist.

Vorzugsweise verwendet die Vorrichtung zum Extrahieren der Inhaltstoffe aus Festsubstanzen durch Nanobläschen der Erfindung ein Fördergerät (nicht im Bild). Das Flüssigkeitsauslassrohr ist an dem Fördergerät angeschlossen, um die nanobläschenhaltige Flüssigkeit aus dem Flüssigkeitsauslassrohr in den Reaktionsbehälter zu fördern und sie mit der zu extrahierenden Festsubstanz zu vermischen. Das Fördergerät besteht aus einer Flüssigkeitspumpe und Leitungen. Die Pumpe ist an einem Ende mit dem Flüssigkeitsauslassrohr 32 und am anderen Ende mit einer Leitung verbunden, um die Flüssigkeit aus dem Nanobläschengenerator 3 in den Reaktionsbehälter 2 einzuleiten.

Die Vorrichtung zum Extrahieren der Inhaltstoffe aus Festsubstanzen durch Nanobläschen dieser Erfindung hat ferner eine Heizung, die an einer beliebigen Stelle der Flüssigkeitsströmungsstrecke angeordnet werden kann. Beispielsweise am Flüssigkeitsspeicher, um die Flüssigkeit darin zu erhitzen. Oder am Ende der Auslassöffnung der extrahierten Flüssigkeit unter dem Reaktionsbehälter, um die extrahierte Flüssigkeit zu erhitzen. Oder zwischen dem Reaktionsbehälter und der Flüssigkeitspumpe, um die nanobläschenhaltige Flüssigkeit zu erhitzen. Beim vorliegenden Ausführungsbeispiel hat das Fördergerät eine erste und eine zweite Leitung. Die Flüssigkeitspumpe ist über die erste Leitung mit dem Eingang 52 der Heizung 5 verbunden. Der Ausgang 51 der Heizung ist über die zweite Leitung mit dem Reaktionsbehälter verbunden. Soll die Flüssigkeit erhitzt werden, wird die Heizung 5 eingeschaltet, um die Flüssigkeitsströme zu erhitzen, anderenfalls wird die Heizung 5 ausgeschaltet.

Der o.g. Reaktionsbehälter 2 kann auf verschiedene Arten gestaltet werden. Beispiel Eins: ein separater Reaktionsbehälter. Darin reagieren die zu extrahierende Festsubstanz und die nanobläschenhaltige Flüssigkeit direkt miteinander, und am Behälterboden wird ein Ventil 21 angebracht, um Ablass der Lösung aus dem Behälter zu steuern. Über dem Reaktionsbehälter befindet sich ein Deckel mit zwei Durchgangsöffnungen: die erste und die zweite, um den Sendekopf 11 und die zweite Leitung durchzulassen.

Da die Festsubstanz jedoch direkt im o.g. Reaktionsbehälter extrahiert wird, ist es unpraktisch, den Rückstand nach dem Extraktionsprozess zu reinigen. Daher hat die o.g. Erfindung die folgenden Verbesserungen vorgenommen:
Ein Reaktionsbehälter ist aufgestellt, ein erster Messerkopf ist am Boden des Reaktionsbehälters montiert. Der erste Messerkopf wird mit dem ersten Ventil verknüpft. Wenn das erste Ventil geschlossen ist, ragt der erste Messerkopf heraus und sticht. Wenn das erste Ventil geöffnet ist, zieht sich der erste Messerkopf zurück und lässt die extrahierte Flüssigkeit im Reaktionsbehälter abfließen.

Über dem Reaktionsbehälter ist ein Deckel montiert, woran ein zweiter Messerkopf und ein zweites Ventil montiert sind. Das zweite Ventil ist mit der zweiten Leitung verbunden und dient zur Steuerung des Durchflusses der nanobläschenhaltigen Flüssigkeit. Der zweite Messerkopf ist mit dem zweiten Ventil verknüpft. Wenn das zweite Ventil geschlossen ist, ragt der zweite Messerkopf heraus und sticht. Wenn das zweite Ventil geöffnet ist, zieht sich der zweite Messerkopf zurück und lässt die nanobläschenhaltige Flüssigkeit in den Reaktionsbehälter hineinfließen.

Während der Extraktion wird eine Kaffeekapsel in den Reaktionsbehälter gegeben und der Deckel geschlossen, ebenfalls werden das erste und zweite Ventil geschlossen. In diesem Moment durchsticht der zweite Messerkopf den Kaffeekapseldeckel und der erste Messerkopf den Kaffeekapselboden. Anschließend wird das zweite Ventil so weit geöffnet, dass die nanobläschenhaltige Flüssigkeit in die Kaffeekapsel gefördert werden kann und das Kaffeepulver in der Kapsel extrahiert. Nach dem Extraktionsprozess wird das erste Ventil so weit geöffnet, dass die extrahierte Kaffeelösung abfließt.

Da die zu extrahierende Festsubstanz Kaffeepulver ist, haben wir Wasser als die Flüssigkeit und einen Ultraschallgenerator als Energiegenerator eingesetzt, um den Arbeitsablauf der Vorrichtung zum Extrahieren der Inhaltsstoffe aus Festsubstanzen der o.g. Erfindung zu verdeutlichen: etwas Kaffeepulver vorab in den Reaktionsbehälter einfüllen, eine bestimmte Menge Wasser aus dem Flüssigkeitsspeicher vorab in den Nanobläschengenerator einleiten. Nachdem der Nanobläschen-generator für eine bestimmte Weile betrieben wurde, wird das nanobläschenhaltige Wasser erzeugt. Diese Flüssigkeit wird durch die Pumpe zuerst zur Heizung, dann zum Reaktionsbehälter gefördert, damit das Kaffeepulver in der Flüssigkeit extrahiert. Gleichzeitig wird der Ultraschallgenerator aktiviert und gibt über den Sendekopf Energie in die Kaffeelösung ab. Durch die Ultraschallwellen zerplatzen die Nanobläschen im Wasser und beschleunigen den Extraktionsvorgang des Kaffeepulvers in der Flüssigkeit, um den Extraktionseffekt zu verstärken.

Das Verfahren zum Extrahieren der Inhaltstoffe aus Festsubstanzen mit der o.g. Vorrichtung enthält die folgenden Schritte: Eine nanobläschenhaltige Flüssigkeit durch einen Nanobläschengenerator erzeugen; die nanobläschenhaltige Flüssigkeit in einen Reaktionsbehälter fördern, mit der zu extrahierende Festsubstanz vermischen und eine Reaktion in Gang setzen; Energie während der Reaktion aus dem Energiegenerator in den Reaktionsbehälter abgeben, um die Nanobläschen zu zerbrechen.

Ist der Energiegenerator ein Ultraschallgenerator, soll er eine Frequenz von mindestens 20 kHz und eine Intensität von mindestens 30 W/in² liefern. Für die Flüssigkeit kann man Leitungswasser, Mineralwasser oder destilliertes Wasser bei Raumtemperatur oder unter der Umgebungs-temperatur nehmen. Das Wasser in tiefer als der Umgebungstemperatur kann durch Abkühlung im Kühlschrank bis oder unter 4 Grad Celsius erzeugt werden.

Der Flüssigkeitsspeicher, die Luftzufuhrkomponente, die raue Komponente und der Reaktionsbehälter werden aus rostfreiem Stahl, Keramik oder einem beliebigen Material hergestellt, das mit Lebensmitteln in Kontakt kommen kann.

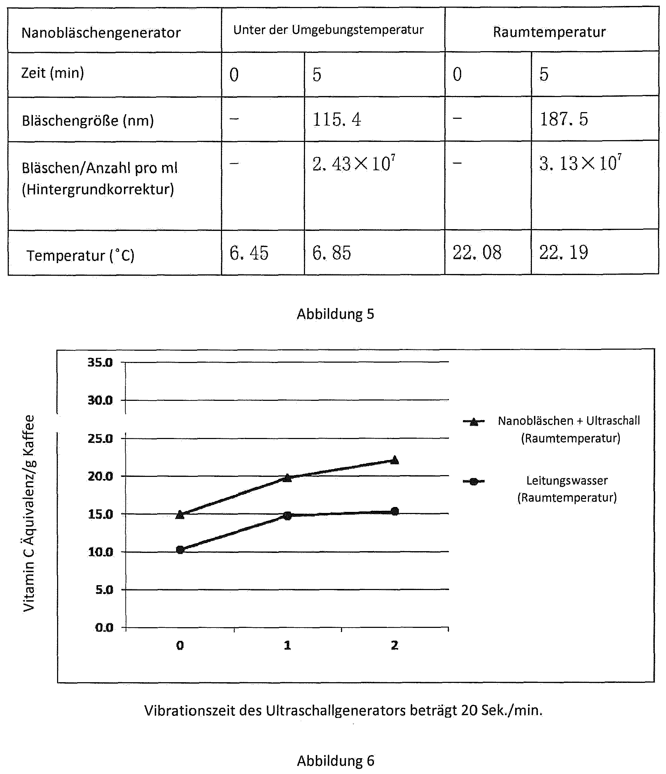

Abbildung 5 zeigt, dass mit diesem Nanobläschengenerator 3,13 × 10⁷ Nanobläschen pro Liter Wasser bei einer Temperatur von 22,1 Grad Celsius in 5 Minuten erzeugt wurden und die Bläschengröße 187,5nm beträgt. Bei tiefer als der Umgebungstemperatur wurden 2,43 × 10⁷ Bläschen pro Liter Wasser in 5 Minuten erzeugt und die Bläschengröße beträgt 115,4 nm.

Im gleichen Zeitraum ist der Extraktionseffekt des Kaffees mit dieser Vorrichtung besser als mit dem herkömmlichen Kaltbrühen. Z.B im gleichen Zeitraum von 5 Minuten weist der extrahierte Kaffee mit dieser Vorrichtung gegenüber dem herkömmlich kaltgebrühten Kaffee einen um 30% höheren Zuckergehalt und eine um 30% höhere *antioxidative* Aktivität auf.

Mit folgenden spezifischen Versuchen wird der Effekt verdeutlicht:

### Versuch 1

Abbildungen 6-7 zeigen den Unterschied am Antioxidantiengehalt des Kaffees bei Raumtemperatur zwischen herkömmlicher Kaltbrühmethode und der Extraktion mit der o.g. Vorrichtung: Bei der herkömmlichen Kaltbrühmethode wird eine bestimmte Menge Kaffeepulver ins Leitungswasser hinzugegeben. Nach 1 Minute Reaktionszeit wurde das freiradikalabfangende Vitamin C in der herkömmlich kaltgebrühten Kaffeelösung von 15mg Äquivalenz/g Kaffee gemessen; bei der Vorrichtung der o.g. Erfindung wird die gleiche Menge Kaffeepulver im erzeugten nanobläschenhaltigen Wasser hinzugegeben. Nach 1 Minute Reaktionszeit und einer Vibrationszeit des gleichzeitig angeschalteten Ultraschallgenerators von 20 Sekunden/Minute wird das freiradikalabfangende Vitamin C in der extrahierten Kaffeelösung von 20mg Äquivalenz/g Kaffee gemessen.

Der Unterschied am Gehalt der Antioxidantien (d.h. Abfangen der freien Radikale) des Kaffees bei tiefer als der Umgebungstemperatur zwischen herkömmlicher Kaltbrühmethode und der Extraktion mit der o.g. Vorrichtung: Bei der herkömmlichen Kaltbrühmethode wird eine bestimmte Menge Kaffeepulver ins Leitungswasser hinzugegeben. Nach 2 Minute Reaktionszeit wurde das freiradikalabfangende Vitamin C in der herkömmlich kaltgebrühten Kaffeelösung von 4mg Äquivalenz/g Kaffee gemessen; bei der Vorrichtung der o.g. Erfindung wird die gleiche Menge Kaffeepulver im erzeugten nanobläschenhaltigen Wasser hinzugegeben. Nach 2 Minute Reaktionszeit und einer Vibrationszeit des gleichzeitig angeschalteten Ultraschallgenerators von 20 Sekunden/Minute wird das freiradikalabfangende Vitamin C in der extrahierten Kaffeelösung von 10mg Äquivalenz/g Kaffee gemessen.

### Versuch 2:

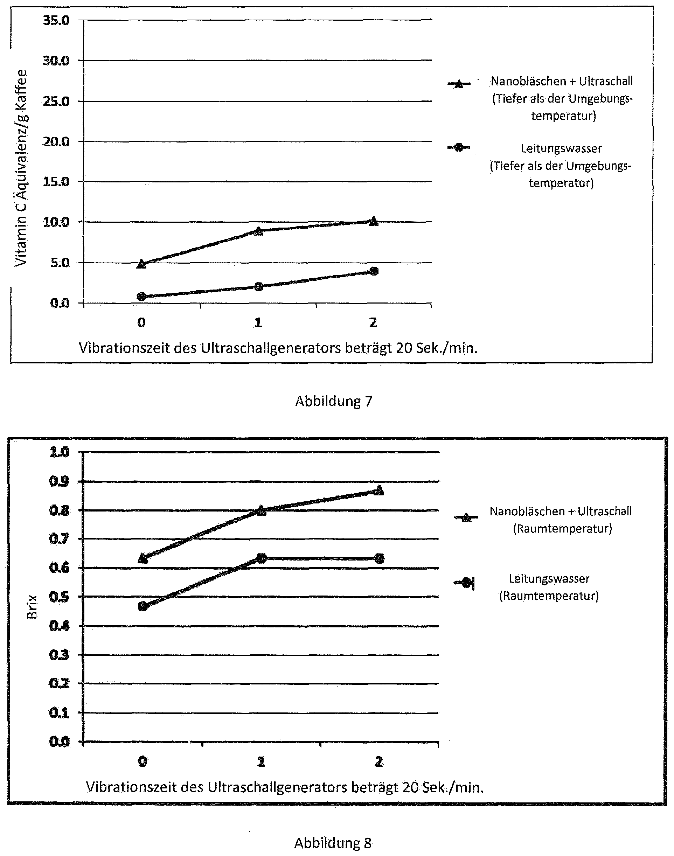

Abbildungen 8-9 zeigen den Unterschied am Zuckergehalt (Brix%) des Kaffees bei Raumtemperatur zwischen herkömmlicher Kaltbrühmethode und der Extraktion mit der o.g. Vorrichtung: Bei herkömmlicher Kaltbrühmethode wird eine bestimmte Menge Kaffeepulver ins Leitungswasser hinzugegeben. Nach 1 Minute Reaktionszeit wurde ein Zuckergehalt in der herkömmlich kaltgebrühten Kaffeelösung von 0,65 gemessen; bei der Vorrichtung der o.g. Erfindung wird die gleiche Menge Kaffeepulver im erzeugten nanobläschenhaltigen Wasser hinzugegeben. Nach 1 Minute Reaktionszeit und einer Vibrationszeit des gleichzeitig angeschalteten Ultraschallgenerators von 20 Sekunden/Minute wird ein Zuckergehalt in der extrahierten Kaffeelösung von 0,8 gemessen. Der Unterschied am Zuckergehalt (Brix%) des Kaffees bei tiefer als der Umgebungstemperatur zwischen herkömmlicher Kaltbrühmethode und der Extraktion mit der o.g. Vorrichtung: Bei herkömmlicher Kaltbrühmethode wird eine bestimmte Menge Kaffeepulver ins Leitungswasser hinzugegeben. Nach 2 Minute Reaktionszeit wurde ein Zuckergehalt in der herkömmlich kaltgebrühten Kaffeelösung von 0,25 gemessen; bei der Vorrichtung der o.g. Erfindung wird die gleiche Menge Kaffeepulver ins erzeugte nanobläschenhaltige Wasser hinzugegeben. Nach 2 Minute Reaktionszeit und einer Vibrationszeit des gleichzeitig angeschalteten Ultraschallgenerators von 20 Sekunden/Minute wird ein Zuckergehalt in der extrahierten Kaffeelösung von 0,55 gemessen.

### Versuch 3:

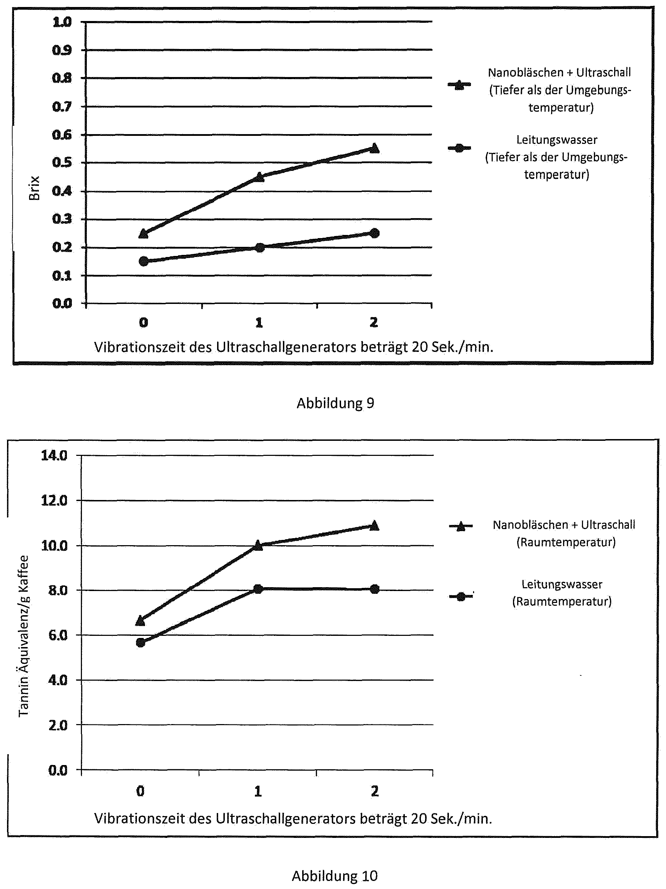

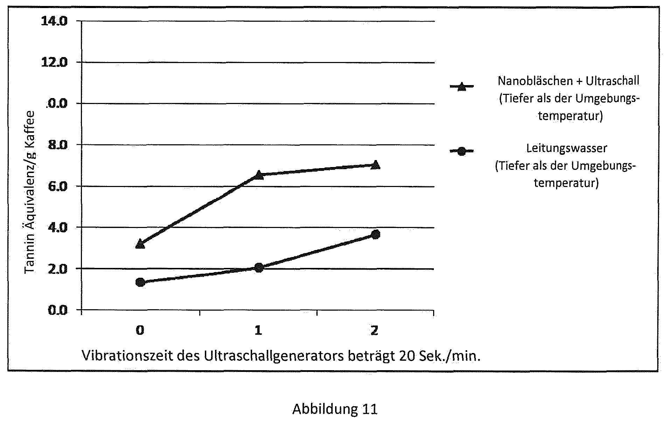

Abbildungen 10-11 zeigen den Unterschied am Polyphenolgehalt des Kaffees bei Raumtemperatur zwischen herkömmlicher Kaltbrühmethode und der Extraktion mit der o.g. Vorrichtung: Bei herkömmlicher Kaltbrühmethode wird eine bestimmte Menge Kaffeepulver ins Leitungswasser hinzugegeben. Nach 1 Minute Reaktionszeit wurde ein Polyphenolgehalt in der herkömmlich kaltgebrühten Kaffeelösung von 8mg Tanninen/g Kaffee gemessen; bei der Vorrichtung der o.g. Erfindung wird die gleiche Menge Kaffeepulver im erzeugten nanobläschenhaltigen Wasser hinzugegeben. Nach 1 Minute Reaktionszeit und einer Vibrationszeit des gleichzeitig angeschalteten Ultraschallgenerators von 20 Sekunden/Minute wird ein Polyphenolgehalt in der extrahierten Kaffeelösung von 10mg Tanninen/g Kaffee gemessen.

Der Unterschied am Polyphenolgehalt des Kaffees bei tiefer als der Umgebungstemperatur zwischen herkömmlicher Kaltbrühmethode und der Extraktion mit der o.g. Vorrichtung: Bei herkömmlicher Kaltbrühmethode wird eine bestimmte Menge Kaffeepulver ins Leitungswasser hinzugegeben. Nach 2 Minuten Reaktionszeit wurde ein Polyphenolgehalt in der herkömmlich kaltgebrühten Kaffeelösung von 3,8mg Tanninen /g Kaffee gemessen; bei der Vorrichtung der o.g. Erfindung wird die gleiche Menge Kaffeepulver im erzeugten nanobläschenhaltigen Wasser hinzugegeben. Nach 2 Minute Reaktionszeit und einer Vibrationszeit des gleichzeitig angeschalteten Ultraschallgenerators von 20 Sekunden/Minute wird ein Polyphenolgehalt in der extrahierten Kaffeelösung von 7mg Tanninen/g Kaffee gemessen.

Fazit: Bei der vorliegenden Erfindung wird ein Nanobläschengenerator zur Erhörung des Nanobläschengehalts in Flüssigkeiten eingesetzt, die nanobläschenhaltige Flüssigkeit zum Reaktionsbehälter fördert und sie mit einem festen Pulver vermischt. Gleichzeitig wird ein Energiegenerator in der Flüssigkeitsmischung aktiviert, um die Nanobläschen zu zerbrechen, damit der Extraktionseffekt der Inhaltstoffe aus Festsubstanzen in Flüssigkeiten verbessert wird. Dies ermöglicht, den Gehalt an Zucker, Polyphenol-Antioxidantien und anderen Substanzen zu erhöhen, die den Geschmack der Getränke verbessern, in Getränke wie Kaffee, chinesischer, westlicher, japanischer und Kräutertees.

Es ist anzumerken, dass Fachleute im Gebiet dieser Erfindung auf Basis der obigen Anleitungen auch Änderungen und Modifikationen an den vorstehenden Ausführungen vornehmen können. Daher ist die vorliegende Erfindung nicht nur auf die oben offenbarten und beschriebenen spezifischen Ausführungsformen beschränkt. Einige Modifikationen und Änderungen der Erfindung sollten auch in den Schutzbereich der Ansprüche dieser Erfindung fallen. Außerdem, obwohl in dieser Beschreibung einige spezifische Begriffe verwendet werden, dienen sie jedoch nur zur Vereinfachung der Beschreibung und stellen keine Einschränkung der Erfindung dar.

## Patentansprüche

1. Eine Vorrichtung zum Extrahieren der Inhaltstoffe aus Festsubstanzen durch Nanobläschen ist **dadurch gekennzeichnet, dass** sie aus einem Reaktionsbehälter für die zu extrahierende Festsubstanz, einem Nanobläschengenerator zum Erzeugen einer nanobläschenhaltigen Flüssigkeit, und einem Energiegenerator besteht. Die nanobläschenhaltige Flüssigkeit wird mit der zu extrahierenden Festsubstanz vermischt, und der Energiegenerator gibt Energie in den Reaktionsbehälter ab, um die Nanobläschen zu zerbrechen.

2. Die Vorrichtung wie im Anspruch 1 ist ferner **gekennzeichnet durch** ein Fördergerät zur Förderung der nanobläschenhaltigen Flüssigkeit in den Reaktionsbehälter, um sie mit der zu extrahierenden Festsubstanz zu vermischen, und der Nanobläschengenerator hat ein Flüssigkeitseinlassrohr und ein mit dem Fördergerät verbundenes Auslassrohr.

3. Die Vorrichtung wie im Anspruch 2 ist ferner **gekennzeichnet durch** einen mit dem Flüssigkeitseinlassrohr verbundenen Flüssigkeitsspeicher.

4. Die Vorrichtung wie im Anspruch 2 ist **dadurch gekennzeichnet, dass** das Fördergerät eine Flüssigkeitspumpe und Leitungen hat, und die Flüssigkeitspumpe ist über eine Leitung mit dem Reaktionsbehälter verbunden.

5. Die Vorrichtung wie im Anspruch 4 ist ferner durch eine Heizung gekennzeichnet, die auf dem Flüssigkeitsspeicher, zwischen der Flüssigkeitspumpe und dem Reaktionsbehälter oder an einer beliebigen Stelle unterhalb des Reaktionsbehälters angebracht wird.

6. Die Vorrichtung nach Anspruch 1 ist **dadurch gekennzeichnet, dass** der Energiegenerator ein Schallwellengenerator oder ein Ultraschallgenerator ist.

7. Die Vorrichtung wie im Anspruch 1 ist **dadurch gekennzeichnet, dass** der Energiegenerator einen Sendekopf hat, der über dem Reaktionsbehälter angeordnet ist, und am Reaktionsbehälter ein erster Schalter zum Steuern des Lösungsabflusses versehen ist.

8. Die Vorrichtung wie im Anspruch 7 ist ferner **dadurch gekennzeichnet, dass** am Boden des Reaktionsbehälters ein mit dem ersten Schaltventil verknüpfter erster Messerkopf zum Durchstechen angebracht ist.

9. Die Vorrichtung wie im Anspruch 3 ist **dadurch gekennzeichnet, dass** die Festsubstanz Kaffeepulver, chinesisches, westliches und japanisches Teepulver, Kräutertee und die Flüssigkeit Wasser ist.

10. Ein Verfahren zum Extrahieren der Inhaltsstoffe aus Festsubstanzen durch Nanobläschen ist durch folgende Schritte gekennzeichnet:
Eine nanobläschenhaltige Flüssigkeit mit dem Nanobläschengenerator erzeugen;
Die nanobläschenhaltige Flüssigkeit in den Reaktionsbehälter fördern, sie mit der Festsubstanz vermischen und die Lösung zur Reaktion bringen;
Während der Reaktion Energie aus dem Energiegenerator in den Reaktionsbehälter abgeben, um die Nanobläschen zu zerbrechen.
